# EUROPEAN PATENT APPLICATION

(11) **EP 4 681 809 A1**
(43) Date of publication of application: **21.01.2026**
(21) Application number: 24188762.9
(22) Date of filing: 16.07.2024
(51) Int. Cl.: B01J 4/00, B01D 53/62, B01D 53/78, B01J 10/00, B01J 19/10, B01D 53/14, B01J 19/00

(54) **GAS SPARGER FOR CARBON CAPTURING**

(71) Applicant: BELINKA PERKEMIJA kemicna industrija, d.o.o., 1231 Ljubljana - Crnuce (SI)
(72) Inventor: KOBAL, Ziga, 1231 Ljubljana- Crnuce (SI); OGRIZEK, Vid, 1231 Ljubljana- Crnuce (SI); PODKORITNIK, Andrej, 1231 Ljubljana- Crnuce (SI); VIRANT, Matej, 1231 Ljubljana- Crnuce (SI); GODEC, Veronika, 1231 Ljubljana- Crnuce (SI)
(74) Representative: Schwarz & Partner Patentanwälte GmbH

(57) **Abstract**

The invention relates to a gas sparger (2), in particular for carbon capturing, wherein the gas sparger (2) comprises a rigid membrane (5) with pores (6) for the passage of gas into a liquid phase (4), wherein the gas sparger (2) further comprises at least one ultrasound transducer (7), wherein the ultrasound transducer (7) is attached to the rigid membrane (5). In further aspects, the invention relates to a reactor (1) comprising said gas sparger (2), a use of the gas sparger (2) and a method for carbon capturing with said reactor (1).

## Description

The present invention generally relates to the field of gas spargers, in particular in the field of environmental engineering, and even more particularly to techniques for enhancing the efficiency of carbon capture processes using gas sparging systems.

Carbon dioxide emissions, primarily generated by fossil fuel combustion, present an immense global challenge, prominently driving climate change and global warming to further extremities. Addressing this crisis demands a comprehensive overview of the problem and a multifaceted approach, including the integration of clean energy and the implementation of emission reduction policies. Among the various strategies being developed to meet these goals, carbon capture, utilization, and storage (CCUS) is emerging as a pivotal technology.

CCUS holds vast promise in combating climate change by capturing CO2 emissions from various industrial processes, allowing them to substantially reduce greenhouse gas emissions. Carbon utilization involves transforming captured CO2 into value-added products, which not only repurposes carbon but also stimulates new economic opportunities. However, despite its potential, the widespread adoption of CCUS faces significant challenges. Current state-of-the-art technologies often struggle with the complexities involved in effectively capturing and storing CO2, especially at the scale required to make a meaningful impact on global emissions. Additionally, the high energy requirements and costs associated with these processes can limit their feasibility and attractiveness to industries.

While CCUS offers progressive benefits, it also presents technical complexities that demand a deep understanding and innovative approach. Existing solutions are often not versatile enough to be applied across various industry emission source points or scalable to a wide range of operating capacities. This lack of versatility and scalability hampers the broader adoption of CCUS technologies. Moreover, current systems can be limited by their inability to integrate seamlessly with existing industrial infrastructure, leading to increased costs and operational disruptions. The need for more effective, adaptable, and economically viable CCUS solutions is therefore critical.

In different technical fields and unrelated to CCUS, filtration systems with membranes are known. Reference is for example made to the patent US 7,008,540 B1, which describes an ultrasonically cleaned membrane filtration system aimed at improving the efficiency of filtration processes by minimizing membrane fouling through the use of ultrasonic energy. The system comprises a casing with an inlet and outlet for the liquid to be filtered and a porous filtration membrane situated between them. An ultrasonic transducer in contact with the liquid and in distance to the membrane generates cavitation bubbles for generating shock waves, which clean the membrane surface, enhancing permeation and reducing fouling. However, this design often requires high power input and does not ensure uniform distribution of ultrasonic energy across the membrane surface, leading to less effective cleaning and higher operational costs.

Another invention in this field is described in CN203356115U with an ultrasound transducer in distance from a membrane, requiring high power input and lack of ultrasound uniformity.

Another system with a ultrasonic element in distance from the membrane is described in CN110090558A, where ultrasonic element is movable and implemented on a hollow tubular membrane allowing targeted cleaning of certain membrane part. Again, high power input is required.

A conceptually different approach is described in JP2016503341A where an ultrasonic transducer is in direct contact to the cleaning membrane to minimize fouling and scaling during reverse osmosis. Such a system works for a tangential flow of the main stream, allowing however only diffusion through the membrane, preventing this invention to be used as high throughput system.

A further system with ultrasound transducers in direct contact with the membrane is described in EP3454977B1 to be used for reverse osmosis but also for dead end filtration. Notably, the ultrasound transducer in EP3454977B1 include modified lead zirconate titanate (PZT), which suffers from ion leaching at low pH levels and consequently poorer long-term stability. Therefore, this document teaches to avoid getting the ultrasound transducers in direct contact with the solution by placing them outside of a housing.

It is an objective of the present invention to provide an improved gas sparger for carbon capturing that enhances the efficiency and versatility of the gas sparging process, in particular for carbon capturing, thereby overcoming the above-mentioned disadvantages of the prior art at least in part. This invention aims to offer a scalable solution that can be integrated into various industrial settings, facilitating more effective CO2 capture and contributing significantly to global emission reduction efforts.

This objective is achieved by means of a gas sparger, in particular for carbon capturing, wherein the gas sparger comprises a rigid membrane with pores for the passage of gas into a liquid phase, preferably an aqueous solution, wherein the gas sparger further comprises at least one ultrasound transducer, wherein the ultrasound transducer is attached to the rigid membrane.

The inventive gas sparger may be understood as a device designed to enhance contact between a gas and liquid phase in a process such as carbon capturing. The inventive gas sparger comprises a rigid membrane with pores for the passage of a gas such as gaseous CO2 into a liquid phase, which may be an aqueous solution, preferably comprising alkali hydroxides and/or alkali carbonates, that reacts with the CO2 to form a solid precipitate. The gas sparger further comprises at least one ultrasound transducer attached to the rigid membrane, either directly or via a rigid member (the definition of "rigid" is the same for the rigid membrane and the rigid member according to the Young's modulus given below). For example, the ultrasound transducer can be attached to the rigid member in such a way that an ultrasound vibration generated by the ultrasound transducer is transferred to the rigid membrane. Thereby, the rigid membrane may in turn vibrate with the frequency generated by the ultrasound transducer.

With the inventive gas sparger, the one or more ultrasound transducers are tightly fixed on the surface of the gas sparging rigid membrane in a way that ensures vibrations are almost equally distributed along the entire rigid surface but allow gas passage inside the gas sparger and through the pores. In other words, the at least one ultrasound transducer preferably does not cover any of the pores.

The gas sparger according to the invention provides several advantages, for example that it enables an efficient prevention of clogging of the gas sparger due to precipitation of solid particles or crystallization on or within the sparger surface. By incorporating ultrasound technology directly into the gas sparger design, precipitation on the membrane can be prevented before it occurs. Therefore, the inventive system is in stark contrast to designs for filtration such as shown in US 7,008,540 B 1, for example, where the ultrasound transducer is located in a distance to the membrane to be cleaned, i.e., where precipitation on the membrane is cleaned after clogging has occurred. Of course, in systems such as shown in US 7,008,540 B 1 it is not possible that the membrane itself vibrates due to the distance between the ultrasound transducer and the membrane.

By incorporating the ultrasound transducer directly into the gas sparger design, it is therefore possible to continuously clean the sparger surface to prevent particle accumulation, thereby extending the efficiency of carbon capture and the solid product utilization process. Without the use of the ultrasound transducers, rapid and complete plugging would occur which would significantly reduce the efficiency of the carbon capture process.

In a preferred embodiment, the gas sparger may comprise at least two ultrasound transducers, and the rigid membrane comprises a plate, wherein the ultrasound transducers are preferably arranged symmetrically on the plate. This arrangement enables further improved prevention of clogging due to precipitation of solid particles or crystallization on or within the sparger surface. This is because the multiple transducers with the symmetrical design can increase the overall cleaning effect and prevent clogging in areas where a single transducer might not be sufficient. The plate could divide a gas phase from a liquid phase in a reactor or be a part of an armature, for example.

In an especially preferred embodiment, the at least one ultrasound transducer is attached to the rigid membrane on the side located opposite of the liquid phase, i.e., the at least one ultrasound transducer is mounted on the side of the rigid membrane that lies upstream with respect to the gas flow, such that the ultrasound transducer is not in direct contact with the liquid, which helps with the construction of the gas sparger design.

It may be provided that the rigid membrane is made out of metal and/or ceramic, which arrangement further improves prevention of clogging caused by precipitation of solid particles or crystallization on or within the sparger. These materials are particularly well-suited for use as gas sparger membranes due to their high strength-to-weight ratio and resistance to corrosion. These materials also bring the needed rigidity for the inventive design.

Further preferably, the rigid membrane has a Young's modulus of at least 2 GPa, at least 10 GPa, at least 50 GPa or at least 100 GPa. A higher Young's modulus can ensure better durability and resistance to deformation under pressure, which is particularly important in high-pressure applications such as carbon capture.

It may be provided that the pores have a diameter between 0,01 µm and 1000 µm, preferably 0,1 µm and 500 µm, especially preferably between 1 µm and 100 µm. The aforementioned ultrasound transducer enables smaller spore sizes than previously possible due to the prevention of clogging of the pores. Therefore, a combination of the features of the ultrasound transducer and the small pores as stated above yields a particularly effective gas sparger. Using such small pores for a gas sparger without ultrasound transducers would result in a fast clogging of the gas sparger.

In a preferred embodiment, the invention provides a reactor, in particular bubble column reactor, comprising a gas sparger as detailed above, wherein the reactor comprises an inlet for providing a gas into a gas phase of the reactor or into the gas sparger, wherein the reactor optionally further comprises an outlet for removing gas from the reactor, optionally an inlet for introducing fluids into the liquid phase and/or optionally an outlet for extracting fluids and/or solids from the liquid phase of the reactor. Such an arrangement enables a continuous operation of the carbon capture process. In the variant in which the reactor comprises an inlet for providing a gas into a gas phase of the reactor, the rigid membrane of the gas sparger typically separates the gas phase (which may be a gas phase of the reactor or a gas phase within the gas sparger) from the liquid phase. In the variant in which the reactor comprises an inlet for providing a gas into the gas sparger, the reactor typically does not have a dedicated gas phase but the gas phase is located inside the gas sparger. Both variants may employ the inventive gas sparger with ultrasound transducers. The outlet for removing gas from the reactor, the inlet for introducing fluids into the liquid phase and/or the outlet for extracting fluids and/or solids from the liquid phase of the reactor typically connect to the liquid phase of the reactor.

In general, the ultrasound transducers could be arranged on the side of the rigid membrane facing away from the liquid to reduce the contact of the solution on the ultrasound transducers. In a preferred embodiment, the reactor comprises an aqueous solution having a pH higher than 8 in the liquid phase and the at least one ultrasound transducers are preferably in direct contact with the solution. The aqueous solution having a pH higher than 8 will reduce the effects of ion leaching on any type of transducer in any arrangement of the gas sparger. For example, the ultrasound transducers may be located on the side opposite of/facing away from the liquid phase the ultrasound transducers (in which case they may or may not come into direct contact with the solution, depending on the design of the rigid membrane), or the ultrasound transducers may be located on the side facing the liquid phase the ultrasound transducers, in which case they will come into direct contact with the solution. However, the ultrasound transducers will not suffer from ion leaching even if they come into direct contact with the solution because the aqueous solution has a pH value higher than 8. It is particularly preferable if the ultrasound transducers comprise piezoelectric actuators including modified lead zirconate titanate (PZT); modified bismuth titanate (BT) and/or modified potassium sodium Niobate (KNN), but in general also for other types of ultrasound transducers. In other words, it is not necessary to provide a case around the ultrasound transducers or provide special measures to arrange the ultrasound transducers outside of the reactor due to the aqueous solution having a pH higher than 8.

Further preferably, the reactor comprises at least one sensor for determining at least one of a gas flow rate, a pressure and a gas sparger surface condition, and a control unit for controlling a frequency and/or power of the at least one transducer, which arrangement enables real-time monitoring and control of the carbon capture process. This information can be used to optimize operating conditions and prevent potential issues before they arise.

In a particularly preferred control scheme, a first pressure sensor upstream of the rigid membrane is provided and/or a second pressure sensor downstream of the rigid membrane is provided, and the control unit is configured to increase the power and/or frequency of the ultrasound transducer if the pressure measured by the first sensor lies above a first threshold value, if the pressure measured by the second sensor lies below a second threshold value and/or if a differential value of the pressure measured by the first sensor and a pressure measured by the second sensor lies above a third threshold value. These practical examples yield particularly effective control schemes of the ultrasound transducer. However, other control schemes based on the pH value of the liquid in the reactor or a gas sparger surface condition are also effective.

In a preferred embodiment, the gas sparger, in particular the rigid membrane and the at least one ultrasound transducer, is located completely within the reactor. Thereby, a compact design can be achieved, and it is not necessary to provide for complicated connection methods to the outside. This is particularly preferable when the at least one ultrasound transducer is attached to the rigid membrane on the side located opposite of the liquid phase as described below, i.e., either on the side of the gas phase within the reactor or within the gas sparger, since the at least one ultrasound transducer will not come into contact with the liquid phase.

In particular, two ways of mounting the gas sparger inside of the reactor are preferred. Firstly, the gas sparger can only be connected to the inlet within the reactor, for example if the gas sparger is a dedicated armature, which yields a particularly simple way to mount the gas sparger. Here, the gas phase would be located entirely within the gas sparger. Alternatively, the gas sparger could be a dividing plate within the reactor, and for example be attached to the side walls of the reactor without penetrating the reactor walls. In this embodiment, when the reactor is filled with fluid, the gas sparger will divide the liquid phase from the gas phase within the reactor.

Preferably, the liquid phase of the reactor is filled with an aqueous solution, in particular the aqueous solution described below.

In a further aspect of the invention, the invention enables a use of the previously detailed gas sparger for sparging a gas into a liquid phase of a reactor, in particular a bubble column reactor, preferably for carbon capturing, wherein the ultrasound transducer is configured to be activated when introducing gas into the inlet to prevent clogging caused by a precipitate formed in the liquid phase or on the surface of pores of the rigid membrane. Having the ultrasound transducer activated while introducing gas through the gas sparger into the liquid phase enables prevention of downtime of the gas sparger caused by clogging. By activating the transducer during operation, it can effectively remove any precipitate that may form and ensure continuous operation.

In yet a further aspect of the invention, a method for carbon capturing is provided, which comprises the step of introducing a gas comprising CO2 into a liquid phase of the reactor, wherein the liquid phase of the reactor comprises an aqueous solution having a pH higher than 8. Such a method enables efficient capture of CO2 from flue gases, for example. The use of an ultrasound-enhanced gas sparger can improve capture rates and reduce energy consumption compared to traditional methods.

In said method, it is preferred if the aqueous solution comprises an alkali hydroxide, preferably sodium hydroxide and/or potassium hydroxide, and/or an alkali carbonate, preferably sodium carbonate and/or potassium carbonate, which arrangement enables efficient carbon capture due to the high pH level. Alkali hydroxides and alkali carbonates are effective at capturing CO2 from flue gases, for example, while also minimizing waste production.

In an embodiment of the present invention the aqueous solution comprises 0.5 to 10 M, preferably 0.5 to 8, more preferably 1 to 8 M, more preferably 1 to 6 M, more preferably 1 to 5 M, of said alkali hydroxide, and/or 0.5 to 5 M, preferably 0.5 to 4 M, more preferably 0.5 to 3 M, more preferably 1 to 3 M, of said alkali carbonate.

To further illustrate the features and advantages of the present invention, reference will now be made to the accompanying drawings. These drawings depict various embodiments of the gas sparger, highlighting the inventive aspects and operational principles in detail. The drawings give non-limiting embodiments for the person skilled in the art to better understand the construction, functionality, and potential applications of the invention.
Figure 1 illustrates a first embodiment of a reactor equipped with a gas sparger
Figure 2 shows a second embodiment of a reactor with a gas sparger.
Figure 3 depicts a system for carbon capturing, wherein s reactor with a gas sparger is integrated into a broader setup, showcasing its application within a carbon capture solution.

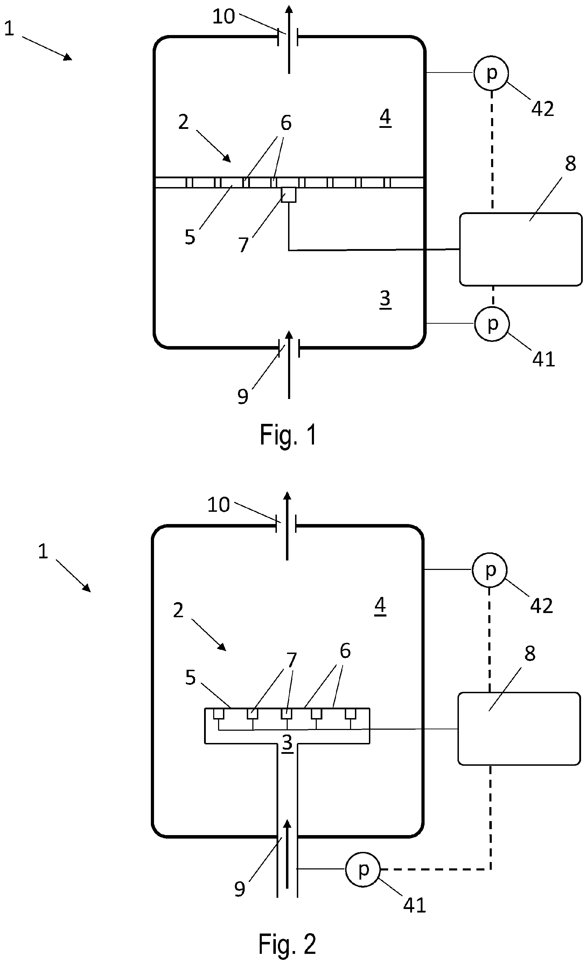

Figure 1 shows a reactor 1 with a gas sparger 2. In the shown embodiment, the gas sparger 2 separates a gas phase 3 within the reactor 1 from a liquid phase 4 within the reactor. The gas sparger 2 is used to introduce gas from the gas phase 3 into the liquid phase 4 in the form of fine bubbles, thereby enhancing the contact between the gas and the liquid phase 4.

In the shown embodiments, the gas sparger 2 is used for introducing fine CO2 bubbles into an aqueous solution having a pH higher than 8 for converting the CO2 into carbonate and/or hydrogen carbonate, which forms a precipitate in the liquid phase. This process can be utilized for Carbon Capture, Utilization, and Storage (CCUS), which is a set of technologies aimed at capturing carbon dioxide emissions from industrial and energy-related sources, preventing them from entering the atmosphere. The captured CO2 can then be either stored (carbon storage) or utilized in various industrial processes to create value-added products (carbon utilization). The goal of CCUS is to reduce greenhouse gas emissions, mitigate climate change, and comply with environmental regulations.

However, the use of the gas sparger 2 described herein is not restricted to carbon capturing. The gas sparger 2 may be used in various industrial applications such as chemical reactors, fermentation tanks, and wastewater treatment systems to promote reactions, increase mass transfer rates, and improve mixing.

The gas sparger 2 comprises a rigid membrane 5 with pores 6 for the passage of gas into the liquid phase 4. The pores 6 allow the gas entering the liquid phase 4 to be dispersed uniformly throughout the liquid.

The rigid membrane 5 is usually a planar plate, but could also be a curved plate, for example. The rigid membrane 5 is usually made out of metal and/or ceramic as these materials usually have the rigidity needed for the purpose described below as well as favorable properties against corrosion. Herein, a "rigid" membrane 5 may be defined as having a Young's modulus of at least 2 GPa, at least 10 GPa, at least 50 GPa or at least 100 GPa.

The pores 6 are usually through-holes through the rigid membrane 5. As mentioned before, the pores 6 are provided for passing gas into the liquid phase 4. It may be desired to use pores 6 that are as fine as possible, but in practice the size of the pores may be restricted due to a clogging caused by precipitations, which might occur when the gas reacts with the liquid phase 4. However, the features disclosed below allow the pores 6 to have a diameter between 0,01 µm and 1000 µm, preferably 0,1 µm and 500 µm, especially preferably between 1 µm and 100 µm.

The gas sparger 2 shown in figure 1 further comprises one ultrasound transducer 7, which is attached to the rigid membrane 5. In general, the gas sparger 2 can have one, two or more than two ultrasound transducers 7, i.e., the invention is not restricted to a certain number of ultrasound transducers 7. If more than one ultrasound transducers 7 are attached to the rigid membrane 5, it is preferred if they are arranged in a symmetrical manner to provide a uniform transmission of the vibration to the rigid membrane 5. In the following, if reference is made to a plurality of ultrasound transducers 7, it is implied that the same may be applied for only one ultrasound transducer 7, and vice versa.

The ultrasound transducer 7 is directly attached to the rigid membrane 5 or via a rigid member, i.e., it is coupled to the rigid membrane 5 in such a way that vibrations generated by the ultrasound transducer 7 cause the rigid membrane 5 to vibrate accordingly. In practice, it can be provided that the ultrasound transducer 7 is connected to a control unit 8, which may drive the ultrasound transducer 7. If more than one ultrasound transducer 7 is provided, each ultrasound transducer 7 may be connected to a different control unit 8 or all ultrasound transducers 7 may be connected to the same control unit 8.

Ultrasound transducers 7 as understood herein are devices that transform electric energy into vibrations, for example with frequencies above 20 kHz, above 100 kHz, above 500 kHz, above 1 MHz or above 5 MHz. The ultrasound transducers 7 may be controlled such that they vibrate with a resonance frequency of the rigid membrane 5, for example. However, this is not necessary and in generally the frequency of the ultrasound transducers 7 may be controlled over a broad spectrum of frequencies. Preferably, the frequency and the output energy of the ultrasound transducers 7 may be controlled independently. The vibration frequency may be controlled by adjusting the frequency of the electrical signal applied to the ultrasound transducer 7 and the energy or intensity of the vibration is controlled by adjusting the amplitude of the electrical signal applied to the ultrasound transducer 7.

In principle, the ultrasound transducers 7 may be of any type. In one variant, the ultrasound transducers 7 may be piezoelectric actuators including modified lead zirconate titanate (PZT); modified bismuth titanate (BT); and/or modified potassium sodium Niobate (KNN). Piezoelectric actuators have the ability to generate voltage in response to an applied mechanical stress (direct piezoelectric effect) or generate a mechanical stress in response to an applied electric filed (inverse piezoelectric effect). In present invention, the vibration actuators may use the inverse piezoelectric effect. Such ultrasound transducers 7 are particularly advantageous in reactors 1, when the liquid phase 4 of the reactor 1 comprises an aqueous solution having a pH higher than 8. This is due to the fact that the materials of the ultrasound transducers 7 such as PZT, BT and/or KNN will not suffer from ion leaching under alkali conditions such as encountered in the CO2 capture process, resulting in their long-term stable performance. Therefore, in the inventive solution, the ultrasound transducers 7 may even be in direct contact with the aqueous solution having a pH higher than 8 without compromising the performance of the ultrasound transducers 7. This is advantageous if the ultrasound transducers 7 are attached on the side of the rigid membrane 5 facing towards the liquid phase 4 or on the side of the rigid membrane 5 located opposite of the liquid phase 4 (even here the ultrasound transducers 7 may come in contact with the aqueous solution under certain circumstances. This is in contrast to the teaching of EP3454977B1, which failed to recognize the possibility to introduce ultrasound transducers 7 directly on the membrane in contact with an alkali solution.

By means of directly (or indirectly via a rigid member) attaching the ultrasound transducers 7 to the rigid membrane 5, precipitation on the rigid membrane 5 can be avoided. This in turn prevents a clogging of the pores 6, which results in a more efficient gas sparger 2 and the possibility to use smaller pores 6 as described above. As is shown in figure 1, the ultrasound transducers 7 may be attached to the side of the rigid membrane 5 that lies opposite to the liquid phase 4 into which the gas is to be dispersed. Thereby, the ultrasound transducers 7 may be driven more efficiently because they are not operated in the liquid phase 4 and secondly they are located at a relatively dry position, thereby reducing the need for waterproofing or liquidproofing the ultrasound transducers 7. In other embodiments, however, the ultrasound transducers could also be attached to the side of the rigid membrane 5 that faces the liquid phase 4.

The design of the gas sparger 2 can vary from embodiment to embodiment. Figure 1 shows a typical bubble column reactor 1, where the gas sparger 2 is used as a dividing plate within the reactor 1. In other words, the reactor 1 comprises an inlet 9 for introducing gas into the gas phase 3 into the reactor 1 and an outlet 10 for removing gas and/or fluid from the reactor 1. The inlet 9 and the outlet 10 lie on opposite sides of the gas sparger 2. In other words, the gas sparger 2 divides the gas phase 3 within the reactor 1 from the liquid phase 4 within the reactor 1. However, such a design is not mandatory.

As shown in figure 2, the gas sparger 2 could be an armature directly connected to the inlet 9 of the reactor 1. In this embodiment, it can be said that the reactor 1 comprises an inlet 9 for providing gas into the gas sparger 2. Other than the design, the functioning of the gas sparger 2 remains the same as disclosed for the embodiment of figure 1.

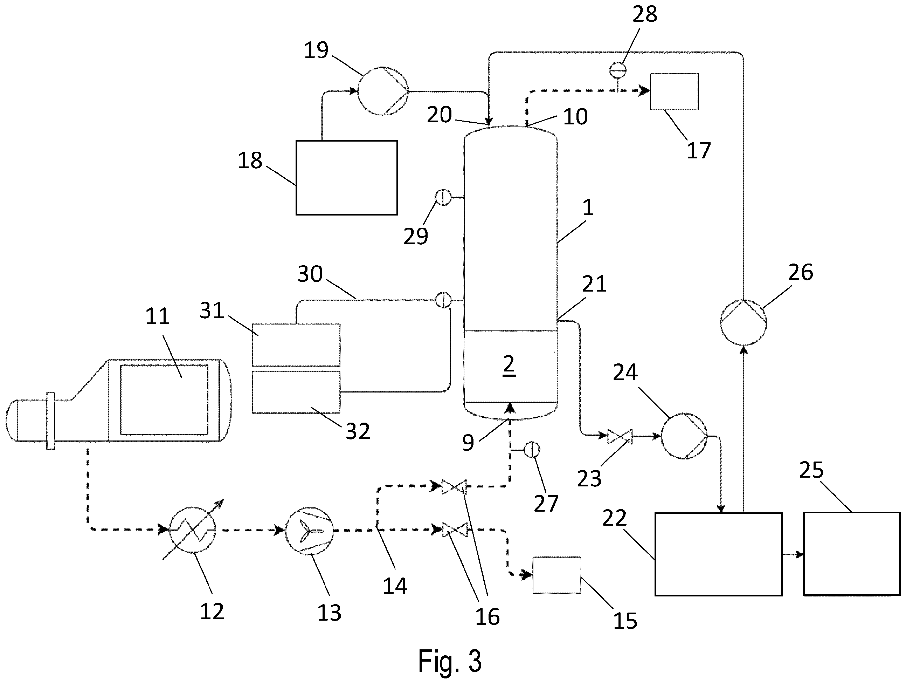

Figure 3 discloses a system in which the reactor 1 with the gas sparger 2 may be used for carbon capturing. In figure 3, dashed lines show the transport of gas and solid lines show the transport of liquid, optionally containing solids.

In the embodiment of figure 3, a source 11 provides CO2 to the system. The source 11 may be a motor, combustor or any other source for providing waste CO2, e.g., comprised in flue gases. The source 11 is connected to a water vapor condensation device 12 and a blower 13 downstream of the water vapor condensation device 12. The blower 13 may be configured to provide a volume flow rate of 1 - 10 m³/h, for example.

Downstream of the blower 13, a junction 14 could be provided. One end of the junction 14 is connected to the inlet 9 of the reactor 1. The other end of the junction 14 may divert unused gas to an exhaust 15. As depicted, one or more valves 16 may be used to control the gas flow to the reactor 1 or to the exhaust 15, respectively. It is to be understood that at least the water vapor condensation device 12, the blower 13, the junction 14, the exhaust 15 and/or the valves 16 may be optional.

Excess gas may be removed from the reactor 1 via the outlet 10 which leads to an exhaust 17, for example.

To introduce the reaction liquid into the reactor 1, a reaction preparation tank 18 may be provided. In this embodiment, a pump 19 may pump the reaction liquid into the reactor 1 via a further inlet 20 of the reactor 1. If the reactor 1 is configures as in figure 1, the further inlet 20 and the inlet 9 for the gas lie on opposite sides of the gas sparger 2. However, it should be mentioned that it is not necessary to provide a further inlet 20 for introducing "fresh" reaction liquid into the reactor 1. In some cases, the reactor 1 may be used as a consumable unit, meaning that a finite amount of reaction liquid is stored therein. In such a system, the efficiency of carbon capturing usually decreases with the lifetime of the reactor 1.

For removing the precipitation (solids) caused by the reaction of CO2 in the reaction liquid, the reactor 1 may comprise a further outlet 21, from which liquid phase comprising precipitation may be removed from the reactor 1 and fed to a solids separation device 22. If the reactor 1 is configured as in figure 1, the further outlet 21 and the inlet 9 for the gas lie on opposite sides of the gas sparger 2. Between the further outlet 21 and the solids separation device 22, a valve 23 and a pump 24 may be provided for regulating the mass flow via the further outlet 21 to the solids separation device 22.

The solids separation device 22 may treat the whole compound of the extracted reaction liquid and the precipitation therein as a waste product or, alternatively and preferably, separates the reaction liquid and the precipitant comprised therein. In this case, the precipitant may be forwarded to a further processing device 25 and the recycled reaction liquid may be re-introduced into the reactor 1. To this end, the solids separation device 22 may be connected to said further inlet 20 or a different inlet of the reactor 1. A pump 26 may be provided between said inlets and the solids separation device 22 to control the mass flow of the recycled reaction liquid into the reactor 1.

The system may also comprise one or more sensors 27, 28, 29 for determining at least one of a gas flow rate and a pressure. One sensor 27 may be connected to a feed line to the inlet 9, one sensor 28 to an exhaust line of the outlet 10, and one sensor 29 to the reactor 1 itself. Sensors 27, 28 may measure the properties of the gas phase and sensor 29 may measure the properties of the liquid phase. Furthermore, liquid may be taken out of and re-introduced into the reactor 1 by means of a loop 30, in which a sampling unit 31 and a pH measurement device 32 may be arranged. By means of the sampling unit 31 and the pH measurement device 32, the properties of the liquid in the reactor 1 may be determined.

Based on measurement values of the sensors 27, 28, 29, the sampling unit 31 and the pH measurement device 32, it can be determined if the gas sparger 2 works efficiently or if the pores 6 of the rigid membrane 5 are clogged, for example. In particular, if the sensor 27 in the feed line yields a high pressure and the sensor 28 in the exhaust line downstream of the outlet 10 and/or the sensor 29 connected directly to the reactor 1 shows a low pressure, it may be determined that the pores 6 of the gas sparger 2 are clogged or are in the process of being clogged. In turn, the control unit 8 may increase the energy output of the ultrasound transducers 7 and/or the frequency of the ultrasound transducers 7.

The control scheme specified in the last two paragraphs can also be used in more general embodiments than the one that is shown in figure 3. For example, figures 1 and 2 show embodiments with a first sensor 41 upstream of the rigid membrane 5 and a second sensor 42 downstream of the rigid membrane 5. The first sensor 41 and/or the second sensor 42 are pressure sensors or mass flow sensors. There can also be provided two first sensors 41 and/or two second sensors 42, such that pressure sensors as well as mass flow sensors can be provided simultaneously. The first sensor 41 will typically measure the pressure or mass flow of gas and can thus be embodied as the sensor 27 shown in figure 3. The second sensor 42 can measure the pressure or mass flow of gas or liquid and can thus be embodied as one or both of the sensors 28 or 29 as shown in figure 3.

As shown in figures 1 and 2, the first and second sensor 41, 42 may be connected to the control unit 8. In turn, the control unit 8 may control the ultrasound transducer 7 based on the measurement values received from the first sensor 41 and/or the second sensor 42. In a particular example, the ultrasound transducer 7 can increase the power and/or the frequency of the ultrasound transducer 7 if the first sensor 41 upstream of the rigid membrane 5 measures a pressure above a first threshold value and/or if the second sensor 42 upstream of the rigid membrane 5 measures a pressure below a second threshold value. Furthermore, the ultrasound transducer 7 can increase the power and/or the frequency of the ultrasound transducer 7 if a differential value of the pressures measured by the first and second sensors 41, 42 lies above a third threshold value. Furthermore, the ultrasound transducer 7 can increase the power and/or the frequency of the ultrasound transducer 7 if a mass flow measured by the first and/or second sensor 41, 42 lies below a fourth threshold value.

However, the control unit 8 may also control the power and/or the frequency of the ultrasound transducer 7 based on different measurement values, for example a pH value of the liquid phase and/or a temperature of the liquid phase or the gas. As such, the loop 30 with sampling unit 31 and pH measurement device 32 may also be employed for more general use cases as shown in figures 1 and 2. Also, further sensors may be used, that could directly measure the surface condition of the rigid membrane 5, for example by measuring a conductivity of the rigid membrane 5. It is of course to be understood that the control unit 8 can also ally a holistic approach and control the ultrasound transducer 7 by means of all different measurement values collected by the various sensors. In this case, the control scheme for controlling the ultrasound transducers 8 by means of the control unit 8 can be supported by machine learning algorithms, for example.

The systems shown in figure 1, figure 2 or figure 3 may be operated at temperatures ranging from 20 °C to 50 °C when used for carbon capturing. This temperature range has been selected to ensure optimal reaction and crystallization kinetics as well as maintaining acceptable solubility of the product.

## Claims

1. Gas sparger (2), in particular for carbon capturing, wherein the gas sparger (2) comprises a rigid membrane (5) with pores (6) for the passage of gas into a liquid phase (4),
**characterized in that**
the gas sparger (2) further comprises at least one ultrasound transducer (7), wherein the ultrasound transducer (7) is attached to the rigid membrane (5).

2. Gas sparger (2) according to claim 1, wherein the gas sparger (2) comprises at least two ultrasound transducers (7) and wherein the ultrasound transducers (7) are preferably arranged symmetrically on the rigid membrane (5).

3. Gas sparger (2) according to any of the preceding claims, wherein the at least one ultrasound transducer (7) is attached to the rigid membrane (5) on the side located opposite of the liquid phase (4).

4. Gas sparger (2) according to any of the preceding claims, wherein the rigid membrane (5) is made out of metal and/or ceramic, and/or wherein the rigid membrane (5) has a Young's modulus of at least 2 GPa, at least 10 GPa, at least 50 GPa or at least 100 GPa.

5. Gas sparger (2) according to any of the preceding claims, wherein the pores (6) have a diameter between 0,01 µm and 1000 µm, preferably 0,1 µm and 500 µm, especially preferably between 1 µm and 100 µm.

6. Reactor (1), in particular bubble column reactor, comprising a gas sparger (2) according to any of the preceding claims, wherein the reactor (1) comprises an inlet (9) for providing a gas into a gas phase (3) of the reactor (1) or into the gas sparger (2), wherein the reactor (1) optionally further comprises an outlet (10) for removing gas from the reactor (1) and/or an inlet (20) for introducing fluids into the liquid phase (4) and/or an outlet (21) for extracting fluids and/or solids from the liquid phase (4) of the reactor (1).

7. Reactor (1) according to claim 6, wherein the reactor (1) comprises an aqueous solution having a pH higher than 8 in the liquid phase (4) and the at least one ultrasound transducers (7) are preferably in direct contact with the solution.

8. Reactor (1) according to claim 6 or 7, comprising at least one sensor (27, 28, 29, 41, 42) for determining at least one of a gas flow rate, a pressure and a gas sparger surface condition, and a control unit (8) for controlling a frequency and/or power of the at least one ultrasound transducer (7).

9. Reactor (1) according to claim 8, wherein a first pressure sensor (41) upstream of the rigid membrane (5) is provided and/or a second pressure sensor (42) downstream of the rigid membrane (5) is provided, and wherein the control unit (8) is configured to increase the power and/or frequency of the ultrasound transducer (7) if the pressure measured by the first sensor (41) lies above a first threshold value, if the pressure measured by the second sensor (42) lies below a second threshold value and/or if a differential value of the pressure measured by the first sensor (41) and a pressure measured by the second sensor (42) lies above a third threshold value.

10. Reactor (1) according to any of the claims 6 to 9, wherein the gas sparger (2), in particular the rigid membrane (5) and the at least one ultrasound transducer (7), is located completely within the reactor.

11. Reactor according to claim 10, wherein the gas sparger (2) is only connected to the inlet (9) within the reactor (1).

12. Use of a gas sparger (2) according to any one of claim 1 to 5 for sparging a gas into a liquid phase (4) of a reactor (1), in particular a bubble column reactor, preferably for carbon capturing, wherein the ultrasound transducer (7) is configured to be activated when introducing gas into the inlet (9) to prevent clogging caused by a precipitate, in particular crystal nuclei, formed in the liquid phase (4) or on the surface of pores (6) of the rigid membrane (5).

13. Method for carbon capturing with a reactor (1) according to any one of the claims 6 to 9, comprising the step of introducing a gas comprising CO₂ into a liquid phase (4) of the reactor (1) via the gas sparger (2), wherein the liquid phase (4) of the reactor (1) comprises an aqueous solution having a pH higher than 8.

14. Method according to claim 13, wherein the aqueous solution comprises an alkali hydroxide, preferably sodium hydroxide and/or potassium hydroxide, and/or an alkali carbonate, preferably sodium carbonate and/or potassium carbonate.

15. Method according to claim 13 or 14, wherein the aqueous solution comprises 0.5 to 10 M, preferably 0.5 to 8, more preferably 1 to 8 M, more preferably 1 to 6 M, more preferably 1 to 5 M, of said alkali hydroxide, and/or 0.5 to 5 M, preferably 0.5 to 4 M, more preferably 0.5 to 3 M, more preferably 1 to 3 M, of said alkali carbonate.
